**Europäisches Patentamt**

**European Patent Office**

**Office européen des brevets**

(19)

(11) Veröffentlichungsnummer : **0 376 995 B1**

(12) # EUROPÄISCHE PATENTSCHRIFT

(45) Veröffentlichungstag der Patentschrift :
**15.07.92 Patentblatt 92/29**

(51) Int. Cl.⁵ : **G01P 15/12**

(21) Anmeldenummer : **89904774.0**

(22) Anmeldetag : **25.04.89**

(86) Internationale Anmeldenummer :
**PCT/DE89/00263**

(87) Internationale Veröffentlichungsnummer :
**WO 89/11104 16.11.89 Gazette 89/27**

(54) **BESCHLEUNIGUNGSAUFNEHMER.**

(30) Priorität : **03.05.88 DE 3814949**

(43) Veröffentlichungstag der Anmeldung :
**11.07.90 Patentblatt 90/28**

(45) Bekanntmachung des Hinweises auf die
Patenterteilung :
**15.07.92 Patentblatt 92/29**

(84) Benannte Vertragsstaaten :
**DE FR GB IT**

(56) Entgegenhaltungen :
**WO-A-87/05704**
**FR-A- 2 438 829**
**GB-A- 2 174 500**
**US-A- 4 488 445**

(73) Patentinhaber : **ROBERT BOSCH GMBH**
**Postfach 30 02 20**
**W-7000 Stuttgart 30 (DE)**

(72) Erfinder : **SEIPLER, Dieter**
**Paul-Hindemith-Str. 1**
**W-7410 Reutlingen (DE)**
Erfinder : **MAREK, Jiri**
**Leiblstr. 10/1**
**W-7410 Reutlingen 22 (DE)**
Erfinder : **ZIEGENBEIN, Botho**
**Eichendorffstr. 4**
**W-6901 Neckarsteinach (DE)**
Erfinder : **HOLLAND, Martin**
**Käsenbachstr. 18**
**W-7400 Tübingen (DE)**

## Beschreibung

Stand der Technik

Die Erfindung geht aus von einem Beschleunigungsaufnehmer nach der Gattung des Hauptanspruchs. Es ist bekannt, bei Beschleunigungsaufnehmern die Biegefeder über die gesamte Breite einseitig einzuspannen und mit Hilfe von piezoresistiven Elementen die Durchbiegung der Biegefeder zu bestimmen. Diese Aufnehmer sind relativ stark querempfindlich und weisen keine Warneinrichtung bei Bruch oder sonstiger Beschädigung der Biegefeder auf.

Aus der Schrift GB-A-2 174 500 ist ein Beschleunigungssensor bekannt, dessen starrer, als seismische Masse dienender Balken mit Hilfe zweier komplanar angeordneter Teile und einem senkrecht zu diesen ausgerichteten flexiblen Teil einseitig an einem Träger befestigt ist. Auf jedem der drei flexiblen Teile ist ein Dehnmeßstreifen zur Erzeugung von Meßsignalen angeordnet. Mit Hilfe dieser Anordnung soll eine Erfassung der Beschleunigung in allen drei Richtungen und insbesondere auch eine Erfassung der Torsion im Bereich der flexiblen Teile möglich sein. Mit Hilfe dieser Vorrichtung kann sowohl die Größe als auch die Richtung der angreifenden Beschleunigungen ermittelt werden, wobei aber keine Hinweise auf eine torsionsfreie Meßsignalgewinnung gegeben sind.

Beim Beschleunigungssensor nach der WO-A-87/05704 ist die Biegefeder mit ihrem einen Ende direkt in einem Gehäuse eingespannt. Auf der Biegefeder befinden sich Widerstände zur Meßsignalgewinnung und gleichzeitig auch die Auswerteschaltung. Am anderen dem freien Ende der Biegefeder ist die seismische Masse angeordnet. Ferner befinden sich in diesem Bereich mechanische Anschläge, um die maximale Auslenkung der Biegefeder in dieser Richtung zu begrenzen. Auch bei diesem Beschleunigungsaufnehmer ist im Bereich der Widerstände eine Torsion der Biegefeder trotz der mechanischen Anschläge möglich.

Der Sensor nach der FR-A-2 438 829 weist eine wiederum direkt in einem Gehäuse einseitig eingespannte Biegefeder auf. Auf der Ober- und Unterseite dieser Biegefeder sind im Bereich der Einspannstelle mehrere Widerstände zur Meßsignalgewinnung aufgebracht. Dieser Sensor weist aber keinen Torsionsschutz auf.

Aus dem US-A-4 488 445 ist ein in Dünnschichttechnik hergestellter Beschleunigungssensor entnehmbar. Diese Technologie unterscheidet sich aber wesentlich von der mit keramischen Materialien arbeitenden Dickschichttechnik.

Vorteile der Erfindung

Der erfindungsgemäße Beschleunigungsaufnehmer mit den kennzeichnenden Merkmalen des Hauptanspruchs hat demgegenüber den Vorteil, daß er besonders einfach, genau und sicher die Beschleunigung bestimmt. Die Querempfindlichkeit der Biegefeder auf Beschleunigung in der Ebene der Biegefeder wird vermindert. Ferner werden durch eine Torsion der Biegefeder hervorrufene Quersignale durch die Aufhängung unterdrückt. Die Biegefeder ist dadurch nur auf Biegung empfindlich Durch die besondere Anordnung der Widerstände der Wheatstone'schen Brückenschaltung ist jederzeit eine einfache Funktionsüberprüfung des mechanischen Bereichs des Aufnehmers, d.h. dessen Biegefeder möglich. Der elektrische geschlossene Kreis der Wheatstone'schen Brücke wird durch eine mechanische Beschädigung des Stegs unterbrochen. Dadurch ist eine elektrische Kontrolle des mechanischen Zustands des Aufnehmers auch im eingebauten Zustand möglich. Durch die besondere Anordnung der Widerstände nach Anspruch 4 kann auch die schwingende seismische Masse mit in die elektrische Kontrolle einbezogen werden. Die Auswerteschaltung kann auf einer Verlängerung der Biegefeder angeordnet werden. Dadurch kann die Auswerteschaltung in einem Bereich hoher Festigkeit in Hybridtechnik auf ein Keramiksubstrat aufgebracht werden. Es werden keine Störsignale in der Auswerteschaltung durch mechanische Verformung in diesem Bereich erzeugt. Ferner kann somit die Biegefeder relativ dünn und empfindlich ausgebildet sein.

Durch die in den Unteransprüchen aufgeführten Maßnahmen sind vorteilhafte Weiterbildungen des im Anspruch 1 angegebenen Sensors möglich.

Zeichnung

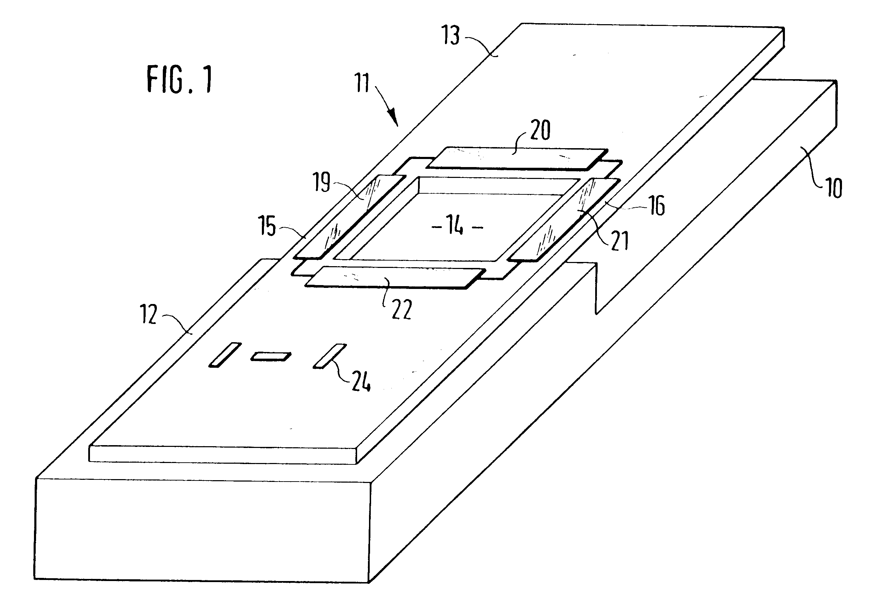

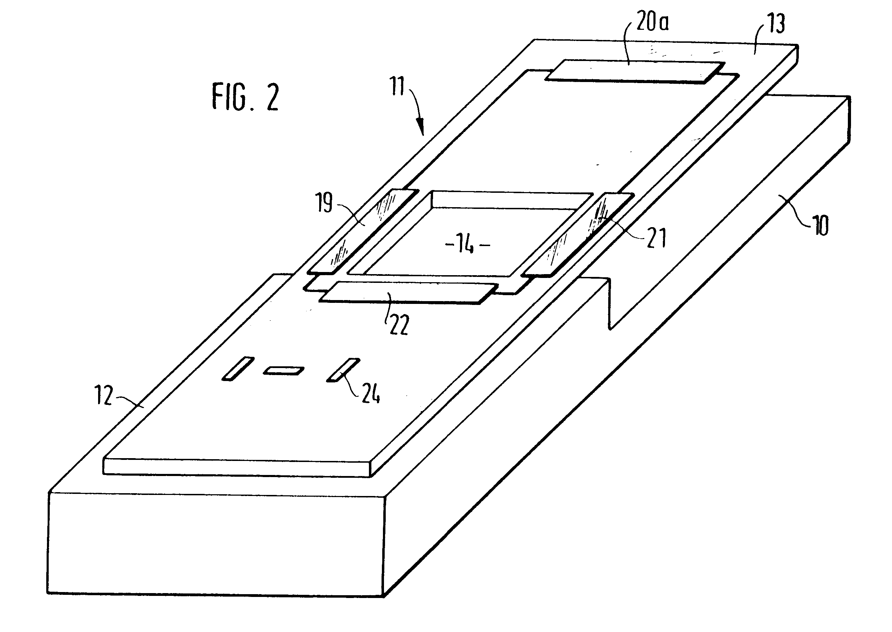

Ein Ausführungsbeispiel der Erfindung ist in der Zeichnung dargestellt und in der nachfolgenden Beschreibung näher erläutert. Es zeigen Figur 1 eine perspektivische Darstellung eines Sensors und Figur 2 eine Abwandlung nach Figur 1.

Beschreibung des Ausführungsbeispiels

In Figur 1 ist mit 10 die stufenartige Halterung eines Beschleunigungsaufnehmers 11 bezeichnet, die aus einem beliebigen, aber relativ steifen Material hergestellt sein kann. Auf der Erhöhung 12 der Halterung 10 ist eine als seismische Masse dienende Biegefeder 13 aus keramischem Material, z.B. Aluminiumoxid ($Al_2O_3$), angeordnet. Die Biegefeder 13 weist im Bereich der Stufe eine Aussparung 14 auf, so daß dadurch zwei parallel verlaufende Biegestege 15, 16 entstehen, mit denen die Biegefeder elastisch auf der Erhöhung 12 der Halterung 10 befestigt ist. Die Aussparung 14 ist so lange ausgebildet, daß die Biegestege 15, 16 möglichst weit voneinander entfernt sind, insbesondere können die Außenkanten der biegestege 15, 16 mit den Außenkanten der Biegefeder 13 fluchtend verlaufen.

Zur Bestimmung der Durchbiegung sind auf der Biegefeder 13 die vier dehnungsempfindlichen Sensorwiderstände 19 bis 22 einer Wheatstone'schen Brückenschaltung angeordnet. Die gegenüberliegenden Widerstände 19, 21 sind jeweils auf einen der Biegestege 15, 16 aufgebracht. Die übrigen Widerstände 20 bzw. 22 befinden sich auf dem schwingungsfähigen Bereich der Biegefeder 13 im Bereich der Aussparung 14 und im Bereich der Aussparung 14 auf der Biegefeder 13 im Bereich auf der Erhöhung 12. Die Widerstände 19 bis 22 sind in Dickschichttechnik auf der Biegefeder 13 aufgebracht, und arbeiten nach dem piezoresistiven Prinzip.

Ferner befindet sich auf der Verlängerung der Biegefeder 13, d.h. im Bereich der Erhöhung 12 der Halterung 10 eine Auswerteschaltung 24 in Hybridtechnik. Sie weist aktive, z.B. verstärkende Glieder (Halbleiter), und passive z.B. R-, C-Bauelemente auf. Auch die Auswerteschaltung 24 ist in Dickschichttechnik aufgebaut.

Von der Auswerteschaltung 24 führen elektrische Leitungen zu einem nicht dargestellten Steuergerät, das die Insassenschutzvorrichtungen des Kraftfahrzeugs wie z.B. Gurtstraffer oder Airbag auslösen kann.

Mit Hilfe der Wheatstone'schen Brückenschaltung kann der mechanische Zustand der Biegefeder 13 elektrisch kontrolliert werden. Werden die Biegestege 15, 16 beschädigt, z.B. bricht einer von ihnen, so wird der elektrische geschlossene Stromkreis der Wheatstone'schen Brükkenschaltung unterbrochen. In der Ausbildung nach Figur 1 sind dabei die elektrischen Leitungen zwischen den Widerständen 19 bis 22 der Brückenschaltung minimiert. Wie in Figur 2 dargestellt, kann der Widerstand 20a aber auch an dem der Erhöhung 12 abgewandten Ende der Biegefeder 13 angeordnet sein. Dadurch ist es möglich, die mechanische Funktionsfähigkeit der gesamten Biegefeder zu überwachen, da die Leitungen über den gesamten Umfang der Biegefeder 13 geführt sind.

Die Funktion eines Beschleunigungsaufnehmers 11 ist hinreichend bekannt und deshalb hier nicht näher beschrieben. Wird die Biegefeder 13 aus ihrer Ruhelage ausgelenkt, so wird die Biegefeder 13 im Bereich der Biegestege 15, 16, d.h. im Bereich der Widerstände 19, 21 gebogen und in diesen eine proportionale Widerstandsänderung erzeugt. Diese Widerstandsänderung wird in der Auswerteschaltung 24 ausgewertet und an das Steuergerät weitergeleitet.

Da die Biegefeder 13 eine keramische Substratplatte ist, können die Widerstände 19 bis 22 auf der Biegefeder und auf deren Verlängerung d.h. im Bereich der Erhöhung 12 der Halterung 10 die Auswerteschaltung 24 in einem einzigen Arbeitsgang in Dickschichttechnik aufgebracht werden. Der Herstellungsaufwand ist dadurch minimiert. Ferner ist durch das biegesteife Material der Halterung 10 die Auswerteschaltung 24 in einem Bereich nahezu frei von mechanischen Biegespannungen aufbringbar. Dadurch können Störsignale in der Auswerteschaltung 24 vermieden werden.

**Patentansprüche**

1. Beschleunigungsaufnehmer zur selbsttätigen Auslösung von Insassenschutzvorrichtungen in Fahrzeugen, insbesondere Kraftfahrzeugen, der bei Abweichung von einer zulässigen Lage des Fahrzeugs ein Steuersignal abgibt und der eine einseitig an einer Halterung (10) befestigte, aus keramischem Material bestehende, als Biegeschwinger wirkende Biegefeder (13) aufweist, deren Schwingbereich die seismische Masse darstellt, dadurch gekennzeichnet, daß der Schwingbereich der Biegefeder (13) mit ihrem der Halterung (10) zugewandten Ende mit mindestens zwei Biegestegen (15,16) elastisch an einer Halterung (10) aufgehängt ist, daß sich auf den Biegestegen (15,16) dehnungsempfindliche Widerstände (19,21) befinden und daß auf der Biegefeder (13) im Bereich der zwischen den Biegestegen (15,16) ausgebildeten Ausnehmung (14) gegenüberliegend je ein Widerstand (20,22) angeordnet ist und daß alle Widerstände (19 bis 22) in einer Wheatstone'schen Brücke verschaltet sind.

2. Aufnehmer nach Anspruch 1, dadurch gekennzeichnet, daß der im Schwingbereich der Biegefeder (13) angeordnete Widerstand (22) sich möglichst nahe im Bereich der Ausnehmung (14) befindet.

3. Aufnehmer nach Anspruch 1, dadurch gekennzeichnet, daß der im Schwingbereich der Biegefeder (13)

EP 0 376 995 B1

angeordnete Widerstand (22) sich auf dem der Ausnehmung (14) abgewandten Ende der Biegefeder (13) befindet.

4. Aufnehmer nach einem der Ansprüche 1 bis 3, dadurch gekennzeichnet, daß die Biegefeder (13) mit zwei, mit einem möglichst großen Abstand voneinander angeordneten Biegestegen (15,16) aufgehängt ist.

5. Aufnehmer nach Anspruch 4, dadurch gekennzeichnet, daß die Biegestege (15,16) parallel zueinander verlaufen und die Außenkanten der Biegestege (15,16) mit den Außenkanten der Biegefeder (13) fluchtend verlaufen.

6. Aufnehmer nach einem der Ansprüche 1 bis 5, dadurch gekennzeichnet, daß die Widerstände (19 bis 22) als piezoresistive Dickschichtwiderstände ausgebildet sind.

7. Aufnehmer nach einem der Ansprüche 1 bis 6, dadurch gekennzeichnet, daß die Biegefeder (13) eine auf einer Erhöhung (12) der Halterung (10) angeordnete Verlängerung aufweist, auf der eine Auswerteschaltung (24) in Hybridtechnik angeordnet ist.

8. Aufnehmer nach einem der Ansprüche 1 bis 7, dadurch gekennzeichnet, daß der Aufnehmer in eine in Dickschichttechnologie hergestellte Schaltung integriert ist.

## Claims

1. Acceleration sensor for the automatic release of occupant protection devices in vehicles, in particular motor vehicles, which emits a control signal in the event of the vehicle deviating from an acceptable position and which has a flexural spring (13) which is attached on one side to a holder (10) consists of ceramic material and acts as a flexural oscillator whose oscillating region represents the seismic mass, characterised in that the oscillating region of the flexural spring (13) is suspended elastically on a holder (10) by means of its end facing the holder (10), by means of at least two flexural webs (15, 16), in that resistors (19, 21) which are sensitive to expansion are located on the flexural webs (15, 16), and in that in each case one resistor (20, 22) is arranged on the flexural spring (13) in the region of the cut-out (14) constructed between the flexural webs (15, 16), and in that all the resistors (19 to 22) are connected in a Wheatstone bridge.

2. Sensor according to Claim 1, characterised in that the resistor (22) arranged in the oscillating region of the flexural spring (13) is located as close as possible in the region of the cut-out (14).

3. Sensor according to Claim 1, characterised in that the resistor (22) arranged in the oscillating region of the flexural spring (13) is located on the end of the flexural spring (13) facing away from the cut-out (14).

4. Sensor according to one of Claims 1 to 3, characterised in that the flexural spring (13) is suspended by means of two flexural webs (15, 16) arranged at as great a distance as possible from one another.

5. Sensor according to Claim 4, characterised in that the flexural webs (15, 16) run parallel to one another and the outer edges of the flexural webs (15, 16) run such that they are aligned with the outer edges of the flexural spring (13).

6. Sensor according to one of Claims 1 to 5, characterised in that the resistors (19 to 22) are constructed as piezo-resistive thick-film resistors.

7. Sensor according to one of Claims 1 to 6, characterised in that the flexural spring (13) has an extension arranged on a raised area (12) of the holder (10), on which extension there is arranged an evaluation circuit (24) which uses hybrid technology.

8. Sensor according to one of Claims 1 to 7, characterised in that the sensor is integrated into a circuit produced using thick-film technology

## Revendications

1. Détecteur d'accélération pour la libération automatique des dispositifs de sécurité des occupants d'un véhicule, en particulier d'un véhicule automobile, qui délivre un signal de commande dans le cas de la déviation par le véhicule à partir de sa position autorisée et qui présente un ressort de flexion (13) fixé d'un côté sur un support (10), réalisé en matériau céramique, agissant comme résonateur de flexion, dont la zone oscillante représente la masse sismique, détecteur d'accélérateur caractérisé en ce que la zone d'oscillation du ressort de flexion (13) est suspendu élastiquement par son extrémité tournée vers le support (10) par au moins deux entretoises de flexion (15, 16) à un support (10), en ce que des résistances (19, 21) sensibles à l'allongement se trouvent sur les entretoises de flexion (15, 16) et en ce que sur le ressort de flexion (13) dans la zone de l'évidement (14) formé entre les entretoises de flexion (15, 16), il est disposé de chaque côté une résistance (20, 22), celles-ci se faisant vis-à-vis et en ce que toutes les résistances (19 à 22) sont cablées en pont de Wheatstone.

4

2. Détecteur selon la revendication 1, caractérisé en ce que la résistance (22) qui est disposée dans la zone d'oscillation du ressort de flexion (13) se trouve si possible au voisinage de la zone de l'évidement (14).

3. Détecteur selon la revendication 1, caractérisé en ce que la résistance (22), disposée dans la zone d'oscillation du ressort de flexion (13), se trouve sur l'extrémité du ressort de flexion (13) située à l'opposé de l'évidement (14).

4. Détecteur selon les revendications 1 à 3, caractérisé en ce que le ressort de flexion (13) est suspendu par deux entretoises (15, 16) disposées à la plus grande distance possible l'une de l'autre.

5. Détecteur selon la revendication 4, caractérisé en ce que les entretoises de flexion (15, 16) s'étendent parallèlement l'une à l'autre et les bords extérieurs des entretoises de flexion (15, 16) coïncident avec les bords extérieurs du ressort de flexion (13).

6. Détecteur selon l'une des revendications 1 à 5, caractérisé en ce que les résistances (19 à 22) jouent le rôle de résistances à couche épaisse piézorésistives.

7. Détecteur selon l'une des revendicaitons 1 à 6, caractérisé en ce que le ressort de flexion (13) présente un prolongement disposé sur une surélévation (12) du support (10), prolongement sur lequel est disposé un circuit d'exploitation (24) selon une technique hybride.

8. Détecteur selon l'une des revendications 1 à 7, caractérisé en ce que le détecteur est intégré dans un circuit fabriqué selon la technologie des couches épaisses.

FIG. 1

FIG. 2

10

13

20a

21

11

19

22

-14-

$0-R$

24

12